# EUROPÄISCHE PATENTANMELDUNG

(11) **EP 4 455 489 A1**
(43) Veröffentlichungstag der Anmeldung: **30.10.2024**
(21) Anmeldenummer: 23170719.1
(22) Anmeldetag: 28.04.2023
(51) Int. Cl.: F15B 13/04, F16K 11/07, F16K 11/085, F16K 11/076, F15B 13/00

(54) **HYDRAULIK- ODER PNEUMATIK-VENTIL**

(71) Anmelder: Hauser, Daniel, 9000 St. Gallen (CH)
(72) Erfinder: Hauser, Daniel, 9000 St. Gallen (CH)
(74) Vertreter: Patentanwälte Hemmer Lindfeld Frese Partnerschaft mbB

(57) **Zusammenfassung**

Die Erfindung betrifft ein Hydraulik- oder Pneumatik-Ventil, welches als 4/3-Wege-Stetigventil ausgebildet ist und eine Ventilhülse sowie einen im Inneren der Ventilhülse (2; 2') angeordneten beweglichen Ventilkolben (4; 4') aufweist, wobei die Ventilhülse zumindest eine erste (P₁) und zumindest eine zweite Strömungsöffnung (As), welche jeweils zu einer Strömungsaussparung (8, 10; 28) in dem Ventilkolben (4) hin geöffnet sind, und zumindest eine erste Steuerkantenöffnung (A_{SK}) sowie zumindest eine zweite Steuerkantenöffnung (B_{SK})aufweist, welche jeweils zum Zusammenwirken mit einer an eine der Strömungsaussparungen (8, 10; 28) angrenzende Steuerkante (16) des Ventilkolbens (4; 4')ausgebildet sind, wobei die Ventilhülse (2; 2') mit den Strömungsöffnungen (P₁, As) und den Steuerkantenöffnungen (A_{SK}, B_{SK}) sowie der Ventilkolben (4; 4') mit den Strömungsaussparungen (8, 10; 28) derart ausgestaltet sind, dass alle Steuerkantenöffnungen (A_{SK}, B_{SK}) dieselbe Strömungsrichtung definieren.

## Beschreibung

Die Erfindung betrifft ein Hydraulik- oder Pneumatik-Ventil, welches als 4/3-Wege-Stetigventil ausgebildet ist.

4/3-Wege-Stetigventile werden beispielsweise in der Hydraulik eingesetzt, um einen hydraulischen Antrieb, wie einen Hydraulikzylinder in seiner Positionierung steuern zu können. Ein 4/3-Wege-Stetigventil verbindet dabei beispielsweise je nach Schaltstellung einen ersten oder einen zweiten Steueranschluss mit einer Fluidzufuhr, während der andere Steueranschluss jeweils mit einem Fluidauslass verbunden ist. Bei einem Stetigventil sind dabei unterschiedliche Öffnungsgrade zur Steuerung der Fluidzufuhr möglich. Derartige Ventile können z.B. elektrisch, magnetisch, hydraulisch oder auch über ein Pilotventil angesteuert werden. Ferner kann ein so ausgestaltetes Ventil auch selber als Pilotventil dienen.

Vor diesem Hintergrund ist es Aufgabe der Erfindung ein Hydraulik- oder Pneumatik-Ventil, welches als 4/3-Wege-Stetigventil ausgebildet ist, bereitzustellen, welches sich schnell schalten lässt und einen großen Durchfluss ermöglicht.

Diese Aufgabe wird gelöst durch ein Hydraulik- oder Pneumatik-Ventil mit den in Anspruch 1 angegebenen Merkmalen. Bevorzugte Ausführungsformen ergeben sich aus den Unteransprüchen, der nachfolgenden Beschreibung sowie den beigefügten Figuren.

Das erfindungsgemäße Hydraulik- oder Pneumatik-Ventil ist als 4/3-Wege-Stetigventil ausgebildet. Ein solches Ventil kann beispielsweise zur Steuerung bzw. Regelung von hydraulischen Antrieben verwendet werden. Das Ventil weist eine Ventilhülse sowie einen im Inneren der Ventilhülse angeordneten beweglichen Ventilkolben auf. Der Ventilkolben öffnet und schließt Ventilöffnungen, die in der Ventilhülse ausgebildet sind. So wird die gewünschte Ventilfunktionalität bereitgestellt. Die Ventilhülse weist zumindest eine erste und zumindest eine zweite Strömungsöffnung auf, welche jeweils zu einer Strömungsaussparung in dem Ventilkolben hin geöffnet sind. Diese Strömungsöffnungen sind relativ zu den Strömungsaussparungen in dem Ventilkolben vorzugsweise so angeordnet, dass in jeder Funktionsstellung des Ventilkolbens die Strömungsöffnungen geöffnet, bevorzugt im Wesentlichen vollständig (d.h. bevorzugt zu mehr als 80%), geöffnet sind. D.h. die Steuer- bzw. Schaltfunktionalität wird nicht durch Beeinflussung des Öffnungsgrades der Strömungsöffnungen realisiert. Die Strömungsöffnungen bilden vielmehr vorzugsweise einen kontinuierlich geöffneten Strömungsdurchgang zu der Strömungsaussparung in dem Ventilkolben oder von der Strömungsaussparung des Ventilkolbens nach außen.

Die Ventilhülse weist ferner zumindest eine erste Steuerkantenöffnung sowie zumindest eine zweite Steuerkantenöffnung auf, welche jeweils zum Zusammenwirken mit einer an eine der Strömungsaussparungen angrenzenden Steuerkante des Ventilkolbens ausgebildet sind. D.h. diese und die nachfolgend definierten Steuerkantenöffnungen sind diejenigen Öffnungen, deren Querschnitt durch Veränderung der Position oder Funktionsstellung des Ventilkolbens variabel freigegeben oder geschlossen werden. Zur Veränderung des Strömungsquerschnittes wird jeweils eine Strömungsaussparung an dem Ventilkolben mit einer Steuerkantenöffnung unterschiedlich weit zur Überdeckung gebracht. So liegt die Steuerkante, welche ein Ende bzw. eine Kante der Strömungsaussparung bildet, der Steuerkantenöffnung gegenüber bzw. begrenzt gemeinsam mit einer Steuerkante der Steuerkantenöffnung den freien Querschnitt der Steuerkantenöffnung. Wenn die Steuerkantenöffnung vollständig geschlossen ist, gibt es vorzugsweise eine Überlappung der Steuerkante an der Ventilhülse mit der Steuerkante an dem Ventilkolben.

Erfindungsgemäß sind die Ventilhülse mit den Strömungsöffnungen und den Steuerkantenöffnungen sowie der Ventilkolben mit den Strömungsaussparungen und den an diese angrenzenden Steuerkanten so ausgestaltet, dass alle Steuerkantenöffnungen dieselbe Strömungsrichtung definieren. D.h. im Betrieb werden alle Steuerkantenöffnungen in derselben Strömungsrichtung durchströmt. Diese Ausgestaltung ermöglicht eine bessere Kompensation der auftretenden Strömungskräfte. Die Strömungsrichtungen sind vorzugsweise in allen Funktionsstellungen oder Stellbereichen des Ventilkolbens gleich, d.h. es findet in den Steuerkantenöffnungen keine Strömungsumkehr abhängig von der Funktionsstellung des Ventilkolbens statt.

Die Ventilhülse kann mehrere erste Steuerkantenöffnungen und mehrere zweite Steuerkantenöffnungen aufweisen. Diese wirken dann gleichzeitig mit dem Ventilkolben bzw. einer oder mehreren Strömungsaussparungen zusammen. D.h. die ersten Steuerkantenöffnungen sind in dieser Ausgestaltung gleichwirkend und die zweiten Steuerkantenöffnungen sind gleichwirkend. Entsprechend können auch die erste und zweite Strömungsöffnung so ausgebildet sein, dass es mehrere erste und mehrere zweite Strömungsöffnungen gibt, welche jeweils gleichwirkend sind. In einer weiteren möglichen Ausgestaltung können jedoch auch weitere Steuerkantenöffnungen mit anderer Funktionalität vorgesehen sein.

Das Ventil weist bevorzugt einen Einlassanschluss und einen Auslassanschluss auf. Der Einlassanschluss kann in einer hydraulischen Anwendung beispielsweise mit einer Druckquelle, wie eine Hydraulikpumpe oder einem Druckspeicher verbunden sein, während der Auslass beispielsweise mit einem Rücklauf oder Tank verbunden sein kann. Das Ventil weist weiter bevorzugt einen ersten Steueranschluss und einen zweiten Steueranschluss auf. Diese werden in einer hydraulischen Anwendung beispielsweise mit einem zu steuernden hydraulischen Aktor, wie einem Hydraulikzylinder verbunden. Beispielsweise kann der erste Steueranschluss mit einem Volumen an einer ersten Seite eines Kolbens und der zweite Steueranschluss mit einem Volumen an der entgegengesetzten zweiten Seite des Kolbens verbunden werden, sodass sich der Kolben über die Steueranschlüsse an der einen oder der anderen Seite mit Druck beaufschlagen lässt. Der Einlassanschluss ist vorzugsweise mit der zumindest einen ersten Strömungsöffnung verbunden. So kann Fluid von dem Einlassanschluss durch die Strömungsöffnung in eine Strömungsaussparung in dem Ventilkolben strömen. D.h. hier ist eine Strömungsrichtung von außen nach innen durch die Strömungsöffnung vorgesehen. Alternativ oder zusätzlich ist vorzugsweise der genannte Auslassanschluss mit zumindest einer der Steuerkantenöffnungen, vorzugsweise mit zwei Steuerkantenöffnungen in der Ventilhülse verbunden. D.h. bei dieser Ausgestaltung würde Fluid durch die Steuerkantenöffnung von innen nach außen strömen, d.h. aus einer Strömungsaussparung in dem Ventilkolben durch die Steuerkantenöffnung zu dem Auslassanschluss. Durch Veränderung der Position des Ventilkolbens wird die Steuerkantenöffnung unterschiedlich weit geöffnet, sodass die Strömung zu dem Auslassanschluss gesteuert bzw. geregelt werden kann.

In einer weiteren möglichen Ausgestaltung der Erfindung kann die Ventilhülse zumindest eine dritte Strömungsöffnung, ggf. mehrere dritte Strömungsöffnungen aufweisen, welche zu einer Strömungsaussparung in dem Ventilkolben hin geöffnet ist. Die zumindest eine dritte Strömungsöffnung stellt gegenüber der zumindest einen ersten und der zumindest einen zweiten Strömungsöffnung eine weitere Funktionalität bereit.

In einer bevorzugten Anwendung ist ein erster Steueranschluss mit zumindest einer zweiten Strömungsöffnung sowie der zumindest einen ersten Steuerkantenöffnung verbunden. Alternativ oder zusätzlich ist ein zweiter Steueranschluss mit der zumindest einen dritten Strömungsöffnung sowie der zumindest einen zweiten Steuerkantenöffnung verbunden. Somit ist einer der beiden oder es sind beide Steueranschlüsse, welche zur Verbindung mit einer zu steuernden hydraulischen Einheit vorgesehen sind, jeweils sowohl mit einer Strömungsöffnung als auch mit einer Steuerkantenöffnung an der Ventilhülse verbunden. Diese Anordnung ermöglicht es, für verschiedene Strömungsrichtungen in den Steueranschlüssen verschiedene Öffnungen zu nutzen. So kann in einer ersten Strömungsrichtung jeweils die Strömungsöffnung genutzt werden, während in der entgegengesetzten Strömungsrichtung die Steuerkantenöffnung wirkt. So wird eine Strömungsrichtungsumkehr an der Steuerkantenöffnung vermieden und es kann sichergestellt werden, dass alle Steuerkantenöffnung in jeder Schaltstellung immer in derselben Strömungsrichtung durchströmt werden. So erfolgt beispielsweise durch die Steuerkantenöffnungen stets eine Strömung von innen nach außen, d.h. durch die Steuerkantenöffnung tritt die Fluidströmung zu dem jeweiligen Steueranschluss aus. In umgekehrter Richtung, wenn eine Strömung von einem Steueranschluss zurück in das Ventil strömt, tritt diese Strömung an der Ventilhülse durch die mit demjenigen Steueranschluss verbundene Strömungsöffnung in die Ventilhülse und eine Strömungsaussparung in dem Ventilkolben ein.

Vorzugsweise weist der Ventilkolben zumindest eine Strömungsaussparung auf, welche in einer ersten Funktionsstellung bzw. einem ersten Stellbereich des Ventilkolbens die erste Strömungsöffnung mit der ersten Steuerkantenöffnung verbindet und in einer zweiten Funktionsstellung bzw. einem zweiten Stellbereich des Ventilkolbens die erste Strömungsöffnung mit der zweiten Steuerkantenöffnung verbindet. In einer ersten Ausführungsform kann die Verbindung der ersten Steuerkantenöffnung und die Verbindung der zweiten Steuerkantenöffnung jeweils durch dieselbe Strömungsaussparung erfolgen, welche lediglich relativ zu den Steuerkantenöffnungen unterschiedlich positioniert ist. Gemäß einer zweiten möglichen Ausgestaltung kann der Ventilkolben zumindest eine erste Strömungsaussparung aufweisen, welche in einer ersten Funktionsstellung die erste Strömungsöffnung mit der ersten Steuerkantenöffnung verbindet, und zumindest eine zweite Strömungsaussparung aufweisen, welche in einer zweiten Funktionsstellung die erste Strömungsöffnung mit der zweiten Steuerkantenöffnung verbindet. D.h. gemäß dieser Ausgestaltung sind unterschiedliche Strömungsaussparungen zur Verbindung der jeweiligen Steuerkantenöffnung mit der Strömungsöffnung vorgesehen.

Die Ventilhülse kann in einer weiteren möglichen Ausgestaltung zumindest eine dritte und vorzugsweise zumindest eine vierte Steuerkantenöffnung aufweisen, welche jeweils zum Zusammenwirken mit einer an eine der Strömungsaussparungen angrenzenden Steuerkante des Ventilkolbens ausgebildet sind. Es können auch mehrere dritte und/oder vierte Steuerkantenöffnungen vorgesehen sein, welche parallel bzw. gleichwirkend angeordnet sind. Diese Steuerkantenöffnungen sind so ausgestaltet, dass sie dieselbe Strömungsrichtung wie die zumindest eine erste und die zumindest eine zweite Steuerkantenöffnung definieren.

Weiter bevorzugt kann in dem Ventilkolben zumindest eine Strömungsaussparung ausgebildet sein, welche in einer möglichen Funktionsstellung eine zweite Strömungsöffnung mit der zumindest einen dritten Steuerkantenöffnung verbindet. Wenn eine vierte Steuerkantenöffnung vorhanden ist, kann der Ventilkolben entsprechend zumindest eine Strömungsaussparung aufweisen, welche in einer möglichen Funktionsstellung eine dritte Strömungsöffnung mit der zumindest einen vierten Steuerkantenöffnung verbindet. Die Funktionsstellungen bzw. Stellbereiche, in welchen die zweite Strömungsöffnung mit der dritten Steuerkantenöffnung verbunden ist oder die dritte Strömungsöffnung mit der vierten Steuerkantenöffnung verbunden ist, sind vorzugsweise unterschiedliche Stellbereiche. Die möglichen Verbindungen von Strömungsöffnungen und Steuerkantenöffnung in Abhängigkeit unterschiedlicher Stellbereiche wird weiter unten beispielhaft beschrieben.

Vorzugsweise definieren alle Steuerkantenöffnungen eine Strömungsrichtung von dem Ventilkolben zu der Ventilhülse hin, d.h. von innen nach außen. Alternativ können alle Steuerkantenöffnungen eine Strömungsrichtung von der Ventilhülse zu dem Ventilkolben hin, d.h. von außen nach innen definieren. D.h. in jeder der beiden Ausgestaltungen sind die Strömungsrichtungen an allen Steuerkantenöffnungen gleichgerichtet. Ferner ist das Ventil vorzugsweise so ausgebildet, dass an keiner der Steuerkantenöffnungen eine Strömungsumkehr in Abhängigkeit der Schaltstellung des Ventilkolbens auftritt, d.h. die Strömungsrichtungen in allen Funktionsstellungen gleichgerichtet sind. Hierdurch wird erreicht, dass sich die auftretenden Strömungskräfte besser kompensieren lassen, da nur eine Strömungsrichtung zu berücksichtigen ist.

Die erfindungsgemäße Ausgestaltung lässt sich mit einem linearbeweglichen wie auch mit einem drehbeweglichen Ventil realisieren. So kann der Ventilkolben in der Ventilhülse linearbeweglich angeordnet sein und mit einem Linearantrieb zur Bewegung des Ventilkolbens verbunden sein. Der Linearantrieb kann z.B. ein hydraulischer, pneumatischer, elektrischer oder magnetischer Antrieb sein. Alternativ kann der Ventilkolben in der Ventilhülse drehbeweglich angeordnet sein und mit einem Schwenkantrieb zur Bewegung des Ventilkolbens verbunden sein. Der Schwenkantrieb kann ebenfalls z.B. pneumatisch, hydraulisch, magnetisch oder elektromotorisch ausgebildet sein. Wenn der Ventilkolben linear beweglich ist, werden die Funktionsstellungen durch lineare Bewegung des Ventilkolbens relativ zu der Ventilhülse verändert. Wenn der Ventilkolben drehbeweglich ist, werden die Funktionsstellungen durch Drehung des Ventilkolbens relativ zu der Ventilhülse verändert.

In einer bevorzugten Ausgestaltung der Erfindung sind die Ventilhülse sowie der Ventilkolben mit den Strömungsaussparungen derart ausgebildet, dass in einem ersten Stellbereich des Ventilkolbens die zumindest eine erste Strömungsöffnung mit der zumindest einen ersten Steuerkantenöffnung und die dritte Strömungsöffnung mit zumindest einer vierten Steuerkantenöffnung verbunden ist. In diesem Stellbereich erfolgt somit eine Strömungsregelung bzw. Steuerung durch die erste Steuerkantenöffnung und die vierte Steuerkantenöffnung. Dabei sind zwei Strömungswege durch das Ventil gegeben, ein erster, bei welchem Fluid durch die erste Strömungsöffnung eintritt, dann durch eine oder mehrere Strömungsaussparungen in dem Ventilkolben strömt und aus der ersten Steuerkantenöffnung austritt. In einem zweiten Strömungsweg tritt Fluid in die dritte Strömungsöffnung oder die mehreren dritten Strömungsöffnungen ein, strömt durch eine oder mehrere Strömungsaussparungen in dem Ventilkolben und tritt aus der einen oder den mehreren vierten Steuerkantenöffnungen wieder aus. D.h. bei dieser Ausgestaltung erfolgt an allen Steuerkantenöffnungen eine Strömung von innen nach außen. Ferner können Ventilhülse und Ventilkolben so ausgestaltet sein, dass alternativ oder zusätzlich in einem zweiten Stellbereich des Ventilkolbens, die zumindest eine erste Strömungsöffnung mit der zumindest einen zweiten Steuerkantenöffnung und die zumindest eine dritte Steuerkantenöffnung mit der zweiten Strömungsöffnung verbunden ist. In diesem zweiten Stellbereich kann somit Fluid in die eine oder mehrere erste Strömungsöffnungen eintreten, durch zumindest eine angrenzende Strömungsaussparung strömen und dann aus der zumindest einen zweiten Steuerkantenöffnung wieder austreten. Gleichzeitig erfolgt eine Strömung, welche in die zumindest eine zweite Strömungsöffnung eintritt, durch eine angrenzende Strömungsaussparung im Ventilkolben verläuft und dann aus der zumindest einen dritten Steuerkantenöffnung wieder austritt. Auch hier erfolgt somit die Strömung durch die Steuerkantenöffnungen stets von innen nach au-ßen. Durch Änderung der Funktionsstellung zwischen diesen zwei Stellbereichen kann an den Steueranschlüssen des Ventils eine Strömungsumkehr erfolgen, ohne dass es zu einer Strömungsumkehr in den Steuerkantenöffnungen kommt. In einem Stellbereich tritt Fluid aus einem ersten Steueranschluss aus und tritt an einem zweiten Steueranschluss wieder in das Ventil ein. In dem zweiten Stellbereich kann dies dann genau umgekehrt sein.

In einer besonderen Ausgestaltung der Erfindung ist der Ventilkolben in der Ventilhülse drehbeweglich angeordnet, d.h. er wird zwischen seinen Stellbereichen bzw. Funktionsstellungen gedreht bzw. verschwenkt. In linearer Richtung kann er sich vorzugsweise nicht bewegen. Die Ventilhülse und der Ventilkolben definieren vorzugsweise mehrere in Richtung der Drehachse des Ventilkolbens versetzte Funktionsebenen, welche sich im Wesentlichen quer zur Drehachse erstrecken. Diese Funktionsebenen sind im Inneren der Ventilhülse vorzugsweise hydraulisch voneinander getrennt. Jede Funktionsebene weist zumindest eine Strömungsöffnung sowie zumindest eine Steuerkantenöffnung auf und der Ventilkolben weist eine Strömungsaussparung auf, über welche diese in Verbindung gebracht werden können. In jeder Funktionsebene können mehrere gleichwirkende Strömungsöffnungen und mehrere gleichwirkende Steuerkantenöffnungen und ggf. mehrere Strömungsaussparungen zu deren Verbindung vorgesehen sein. Die mehreren Strömungsaussparungen verbinden dabei jeweils zumindest eine Strömungsöffnung und eine Steuerkantenöffnung in gleicher Weise. D.h. alle Strömungsverbindungen in einer Funktionsebene sind vorzugsweise stets gleich weit geöffnet oder geschlossen, abhängig von der Funktions- oder Drehstellung des Ventilkolbens. So kann über die Position des Ventilkolbens eine veränderliche Verbindung zwischen der zumindest einen Strömungsöffnung sowie der zumindest einen Steuerkantenöffnung in der jeweiligen Funktionsebene hergestellt werden.

In einer besonderen Ausführungsform der Erfindung definieren die Ventilhülse und der Ventilkolben vier Funktionsebenen, von denen in einer ersten Funktionsebene zumindest eine dritte Steuerkantenöffnung und zumindest eine zweite Strömungsöffnung angeordnet sind. In einer zweiten Funktionsebene sind vorzugsweise zumindest eine erste Strömungsöffnung und zumindest eine erste Steuerkantenöffnung angeordnet. In der dritten Funktionsebene sind vorzugsweise zumindest eine erste Strömungsöffnung und zumindest eine zweite Steuerkantenöffnung angeordnet. In der vierten Funktionsebene sind zumindest eine vierte Steuerkantenöffnung und eine dritte Strömungsöffnung angeordnet. Die zumindest eine dritte und die zumindest eine vierte Steuerkantenöffnungen in der ersten und der vierten Funktionsebene sind vorzugsweise mit demselben Anschluss des Ventils verbunden, werden aber nicht gleichzeitig geöffnet. Die Zuordnung der einzelnen Strömungsöffnungen und Steuerkantenöffnungen zu jeweiligen Anschlüssen des Ventils, d.h. einem Einlassanschluss, einem Auslassanschluss, einem ersten Steueranschluss und einem zweiten Steueranschluss ist dabei bevorzugt so, wie sie oben schon beschrieben wurde. So können die Funktionalitäten des 4/3-Wege-Stetigventils über die vier Funktionsebenen bei Drehung des gemeinsamen Ventilkolbens realisiert werden. Vorzugsweise sind die Strömungsaussparungen in dem Ventilkolben in den Funktionsebenen so ausgestaltet, dass in einem ersten Stellbereich, d.h. in einem ersten Winkelbereich, in welchem der Ventilkolben zwischen verschiedenen Funktionsstellungen verschwenkt wird, Strömungswege in der zweiten und vierten Funktionsebene geöffnet sind, während die Strömungswege in der ersten und dritten Funktionsebene geschlossen sind. So werden steuerbare Strömungsverbindungen in der zweiten Funktionsebene von einer ersten Strömungsöffnung zu einer ersten Steuerkantenöffnung und in einer vierten Funktionsebene von der dritten Strömungsöffnung zu der vierten Steuerkantenöffnung geöffnet. In diesem Stellbereich kann durch Veränderung der Winkellage der Strömungsquerschnitt in der ersten und der vierten Steuerkantenöffnung verändert werden. Aufgrund der Anordnung der Strömungsaussparungen sind in einem zweiten Stellbereich die Strömungsverbindungen in der zweiten und vierten Funktionsebene geschlossen und es sind die Strömungsverbindungen in der ersten und dritten Funktionsebene geöffnet, um Druck und/oder Durchfluss zu regeln. Dabei wird in einer ersten Funktionsebene eine Strömungsverbindung von einer zweiten Strömungsöffnung zu einer dritten Steuerkantenöffnung und in einer dritten Funktionsebene eine Strömungsverbindung von einer ersten Schaltöffnung zu einer zweiten Steuerkantenöffnung hergestellt. Durch Veränderung der Winkellage kann der Öffnungsgrad der zweiten und dritten Steuerkantenöffnung variiert werden. Es ist zu verstehen, dass in jeder Funktionsebene mehrere gleichwirkende Strömungsöffnungen und Steuerkantenöffnungen vorhanden sein können. Der Aufbau des Ventils mit einem drehbaren Kolben und den mehreren Funktionsebenen ermöglicht einen sehr kompakten Aufbau. Ferner ermöglicht dies in einem die Ventilhülse umgebenden Ventilgehäuse eine günstige Ausgestaltung der erforderlichen Strömungskanäle.

Gemäß einer weiteren Ausführungsform sind in zumindest zwei Funktionsebenen die Steuerkanten an dem Ventilkolben in Umfangsrichtung versetzt zueinander angeordnet, vorzugsweise in einem Winkel von 90° zueinander versetzt. Die Öffnungen in der Ventilhülse sind jedoch in den beiden Funktionsebenen vorzugsweise an denselben Winkelpositionen angeordnet. Weiter bevorzugt sind in den zumindest zwei Funktionsebenen die zumindest eine dritte und die zumindest eine vierte Steuerkantenöffnungen an derselben Winkelposition wie die zumindest eine erste Strömungsöffnung und die zumindest eine erste und die zumindest eine zweite Steuerkantenöffnungen an derselben Winkelposition wie die zumindest eine zweite und die zumindest eine dritte Strömungsöffnungen angeordnet. Dadurch können die Anschlüsse in einem Ventilgehäuse günstig angebunden werden. Durch unterschiedliche Drehung des Ventilkolbens können die verschiedenen Stellbereiche bewirkt werden, sodass z.B. bei Drehung in eine Richtung eine erste Strömungsverbindung dauerhaft geschlossen ist und eine zweite Strömungsverbindung geöffnet ist, während in umgekehrter Drehrichtung die erste Strömungsverbindung geöffnet und die zweite Strömungsverbindung geschlossen ist. In den Stellbereichen kann jeweils durch Veränderung der Funktionsstellung bzw. des Drehwinkels des Ventilkolbens der Strömungsquerschnitt der geöffneten Strömungsverbindung verändert werden.

Weiter bevorzugt ist die Ventilhülse so ausgestaltet, dass in den Funktionsebenen, bevorzugt den beschriebenen vier Funktionsebenen, die zumindest eine erste Steuerkantenöffnung, die zumindest eine zweite Steuerkantenöffnung, die zumindest eine zweite Strömungsöffnung und die zumindest eine dritte Strömungsöffnung an derselben ersten Umfangsposition bezüglich der Längsachse der Ventilhülse angeordnet sind. Dies ermöglicht es, dass die beiden Steueranschlüsse des Ventils in dem Ventilgehäuse an derselben Umfangsseite bzw. Umfangsposition der Ventilhülse münden können. In dem Fall, dass in jeder Funktionsebene jeweils zwei identische Strömungsöffnungen und zwei identische Steuerkantenöffnungen an jeweils diametral gegenüberliegenden Seiten angeordnet sind, können jeweils spiegelsymmetrische Anordnungen der genannten Steuerkanten- und Strömungsöffnungen an zwei diametral entgegengesetzten Umfangsbereichen der Ventilhülse ausgebildet sein. Weiter bevorzugt sind zumindest eine erste Strömungsöffnung und die zumindest eine dritte Steuerkantenöffnung sowie die zumindest eine vierte Steuerkantenöffnung an derselben zweiten Umfangsposition oder ggf. an zwei diametral entgegengesetzten zweiten Umfangspositionen der Ventilhülse angeordnet. Die erste und die zweite Umfangsposition sind dabei in Umfangsrichtung versetzt, vorzugsweise um 90° versetzt. Durch diese Anordnung wird erreicht, dass an zwei diametral gegenüberliegenden Umfangspositionen der Ventilhülse die Steueranschlüsse zu der Ventilhülse hin münden, während an zwei, hierzu um 90° versetzten diametral gegenüberliegenden Umfangspositionen den Einlass- und Auslassanschluss an Ventilhülse münden. So können die erforderlichen Strömungskanäle in einem Ventilgehäuse, in welchem die Ventilhülse angeordnet ist, relativ einfach ausgebildet werden.

Gemäß einer weiteren möglichen Ausgestaltung der Erfindung kann der Ventilkolben in der Ventilhülse drehbeweglich angeordnet sein und die Ventilhülse und der Ventilkolben können eine oder mehrere Funktionsebenen definieren, in welcher einander diametral entgegengesetzt zwei gleichartige Strömungsöffnungen und um 90° versetzt zu diesen einander diametral entgegengesetzt zwei gleichartige Steuerkantenöffnungen angeordnet sind. Die beiden Steuerkantenöffnungen und die beiden Strömungsöffnungen liegen dabei bevorzugt in derselben Querschnittsebene bezogen auf die Drehachse des Ventilkolbens, d.h., die Mittelpunkte der Öffnungen liegen vorzugsweise in derselben Querschnittsebene. Der Ventilkolben weist bei dieser Ausführungsform bevorzugt in dieser Funktionsebene zwei im Querschnitt zueinander punktsymmetrisch ausgebildete Strömungsaussparungen auf, welche vorzugsweise durch einen Verbindungskanal miteinander verbunden sind. Der Verbindungskanal ermöglicht einen Druckausgleich zwischen den beiden Strömungsaussparungen. Bei dieser punktsymmetrischen Ausgestaltung werden zwei identische Strömungswege zwischen jeweils einer Strömungsöffnung und einer Steuerkantenöffnung geschaffen, welche abhängig vom Drehwinkel stets gleich weit geöffnet sind. So kann bei kompakter Bauweise ein großer Strömungsquerschnitt erreicht werden. Gleichzeitig werden durch die Strömungen aufgrund des punktsymmetrischen Aufbaus einander entgegengesetzte Kraftverhältnisse in den Strömungsaussparungen sowie entgegengesetzte Drehmomente erzeugt, welche sich somit im Wesentlichen aufheben. So werden auftretende Momente und Querkräfte minimiert und es können die erforderlichen Stellkräfte gering gehalten werden und eine hohe Winkelbeschleunigung bei der Bewegung erzielt werden. Im Falle, dass mehrere Funktionsebenen vorgesehen sind, sind vorzugsweise alle, beispielsweise alle vier Funktionsebenen in dieser Weise ausgesta Itet.

Gemäß einer weiteren bevorzugten Ausgestaltung sind die Strömungsaussparungen in dem Ventilkolben so ausgebildet, dass in einem Strömungsweg von einer Strömungsöffnung zu einer Steuerkantenöffnung in der Strömungsaussparung eine Strahlumlenkung erfolgt, welche eine Kraft auf den Ventilkolben bewirkt. Im Falle eines drehbeweglichen Ventilkolbens bewirkt die Kraft vorzugsweise ein Drehmoment. Eine solche Kraft bzw. ein solches Drehmoment kann den Strömungskräften, welche an den Steuerkanten entstehen, entgegenwirken, sodass eine Kraftkompensation erreicht wird.

Nachfolgend wird die Erfindung beispielhaft anhand der beigefügten Figuren beschrieben. In diesen zeigt:
- Figur 1: eine schematische Schnittansicht eines Hydraulik-Ventils gemäß einer ersten Ausführungsform der Erfindung,
- Figur 2: eine schematische Schnittansicht eines Hydraulik-Ventils gemäß einer zweiten Ausführungsform,
- Figur 3: eine um 90° gedrehte Schnittansicht des Ventils gemäß Figur 2,
- Figur 4a: einen Querschnitt der Ventilhülse und des Ventilkolbens entlang der Linie I in Figur 2,
- Figur 4b: einen Querschnitt der Ventilhülse und des Ventilkolbens entlang der Linie I in Figur 2 mit dem Ventilkolben in einer zweiten Funktionsstellung,
- Figur 5a: einen Querschnitt der Ventilhülse und des Ventilkolbens entlang der Linie II in Figur 2,
- Figur 5b: einen Querschnitt der Ventilhülse und des Ventilkolbens entlang der Linie II in Figur 2 mit dem Ventilkolben in einer zweiten Funktionsstellung,
- Figur 6a: einen Querschnitt der Ventilhülse und des Ventilkolbens entlang der Linie III in Figur 2,
- Figur 6b: einen Querschnitt der Ventilhülse und des Ventilkolbens entlang der Linie III in Figur 2 mit dem Ventilkolben in einer zweiten Funktionsstellung,
- Figur 7a: einen Querschnitt der Ventilhülse und des Ventilkolbens entlang der Linie IV in Figur 2,
- Figur 7b: einen Querschnitt der Ventilhülse und des Ventilkolbens entlang der Linie IV in Figur 2 mit dem Ventilkolben in einer zweiten Funktionsstellung,
- Figur 8: eine Draufsicht auf die Unterseite des Ventilgehäuses,
- Figur 9a: einen Querschnitt des Ventilgehäuses und der Ventilhülse entlang der Linie I in Figur 2,
- Figur 9b: einen Querschnitt des Ventilgehäuses und der Ventilhülse entlang der Linie II in Figur 2,
- Figur 9c: einen Querschnitt des Ventilgehäuses und der Ventilhülse entlang der Linie V in Figur 8,
- Figur 9d: einen Querschnitt des Ventilgehäuses und der Ventilhülse entlang der Linie III in Figur 2, und
- Figur 9e: einen Querschnitt des Ventilgehäuses und der Ventilhülse entlang der Linie IV in Figur 2.

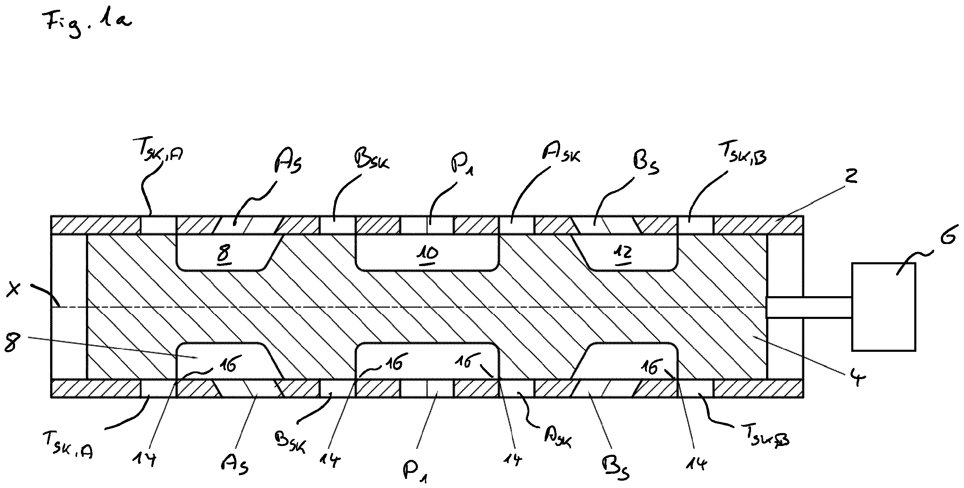

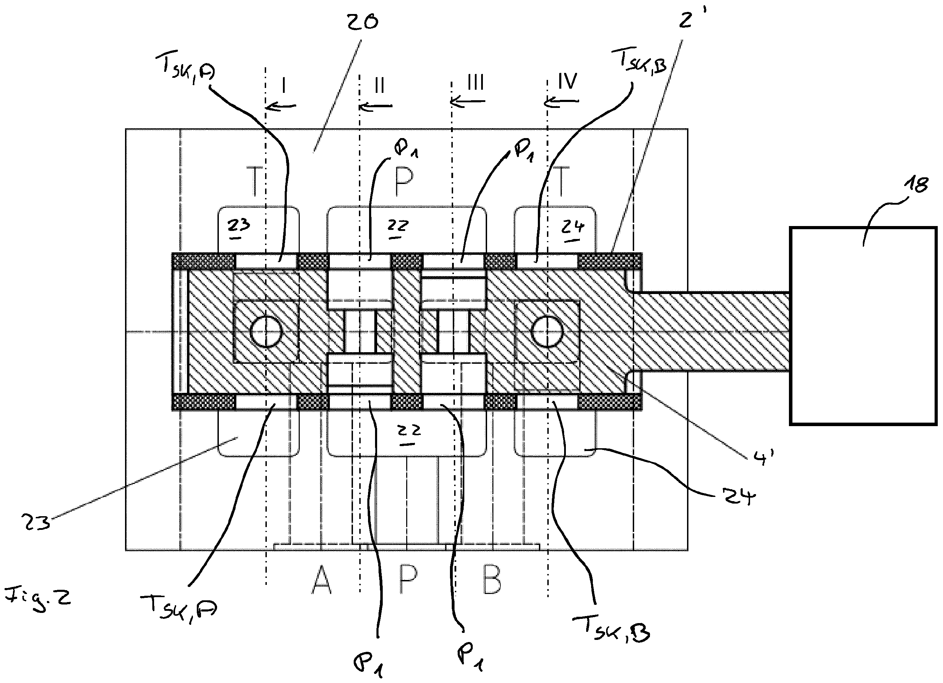

Das in Figur 1a-1c gezeigte Ausführungsbeispiel ist ein Ventil mit einem linear beweglichen Ventilkolben 2, während das Ausführungsbeispiel gemäß Figuren 2 bis 9 einen drehbaren Ventilkolben aufweist.

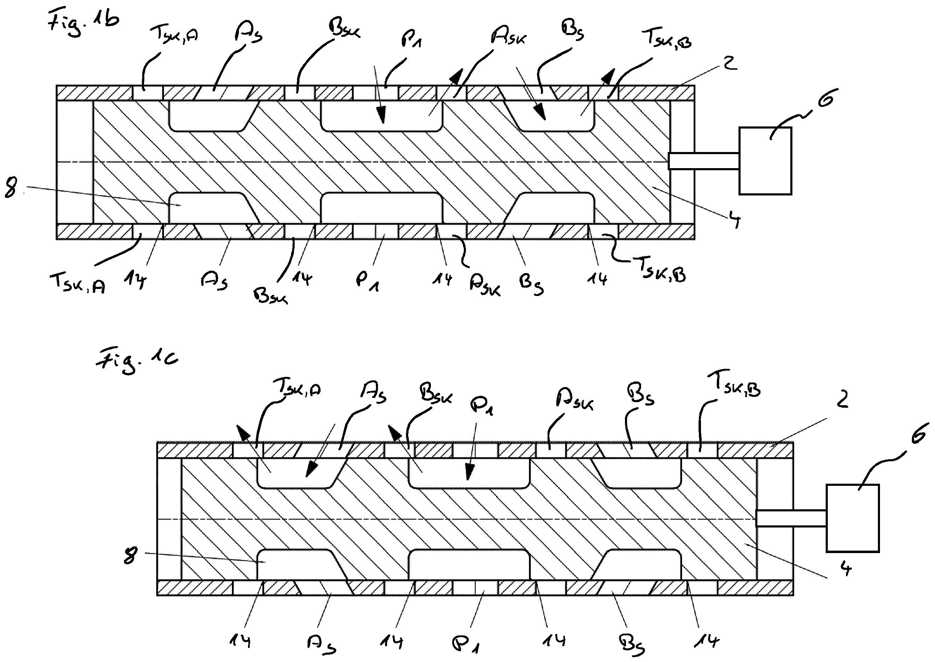

Figur 1a-1c zeigt eine Querschnittansicht einer Ventilhülse 2 mit einem im Inneren der Ventilhülse 2 angeordneten Ventilkolben 4. Der Ventilkolben 4 ist entlang der Längsachse x von Ventilhülse 2 und Ventilkolben 4 in der Ventilhülse 2 linear verschiebbar. Dazu ist ein Linearantrieb 6 mit dem Ventilkolben 4 verbunden. Der Ventilkolben weist drei ringförmige Strömungsaussparungen 8, 10 und 12 auf. Die Strömungsaussparung 8, 10 und 12 sind zum Außenumfang des Ventilkolbens 4 geöffnet und werden an dieser Seite durch die Ventilhülse 2 überdeckt. In der Ventilhülse 2 sind mehrere Anordnungen von Öffnungen ausgebildet. Zentral ist eine ringförmige Anordnung von mehreren ersten Strömungsöffnungen P₁ angeordnet. Beabstandet zu dieser gibt es eine ringförmige Anordnung von zwei oder mehr zweiten Strömungsöffnungen As und eine ringförmige Anordnung von zwei oder mehr dritten Strömungsöffnungen Bs. Die erste Strömungsöffnungen P₁ werden von der Strömungsaussparung 10 überdeckt, und zwar in jeder linearen Position bzw. Funktionsstellung des Ventilkolbens 4. Die Figur 1a zeigt eine Ruhestellung und die Figuren 1b und 1c zeigen zwei verschiedene Funktionsstellungen des Ventilkolbens 4. Die zwei oder mehr zweiten Strömungsöffnungen As werden von der Strömungsaussparung 8 überdeckt, auch in jeder linearen Position bzw. Funktionsstellung des Ventilkolbens 4. Entsprechend werden die dritten Strömungsöffnungen Bs von der Strömungsaussparung 12 überdeckt, auch in jeder linearen Position des Ventilkolbens 4. Die drei verschiedenen Strömungsöffnungen P, As und Bs dienen als Strömungseingänge. D.h. hier erfolgt die Strömung von außen in das Innere der Strömungsaussparungen 8, 10, 12. Die erste Strömungsöffnungen P₁ sind vorzugsweise zur Verbindung mit einer Hydraulikquelle vorgesehen. Die zweiten und dritten Strömungsöffnungen As, Bs sind bevorzugt zur Verbindung mit Steueranschlüssen des Hydraulik-Ventils, d.h. zur Verbindung mit einem hydraulischen Aktor vorgesehen.

Neben den genannten Strömungsöffnungen, welche stets geöffnet, aber nicht zwingend vollständig geöffnet sind, weist die Ventilhülse 2 Steuerkantenöffnungen auf. Zwischen der ringförmigen Anordnung der ersten Strömungsöffnungen P₁ und der dritten Strömungsöffnungen Bs ist eine ringförmige Anordnung von ersten Steuerkantenöffnungen A_{SK} angeordnet. Zwischen der Anordnung von ersten Strömungsöffnungen P₁ und der ringförmigen Anordnung von zweiten Strömungsöffnungen As ist eine ringförmige Anordnung von zweiten Steuerkantenöffnungen B_{SK} ausgebildet. Die ersten Steuerkantenöffnungen A_{SK} können über die Strömungsaussparung 10 mit der ersten Strömungsöffnung P₁ verbunden werden, wenn der Ventilkolben 4 wie in Figur 1b gezeigt nach rechts verlagert wird. Wird der Ventilkolben 4 in der Figur 1c gezeigt nach links verlagert, wird eine Verbindung zwischen der Strömungsöffnungen P₁ und den zweiten Steuerkantenöffnungen B_{SK} über die Strömungsaussparung 10 hergestellt.

Darüber hinaus gibt es eine ringförmige Anordnung von dritten Steuerkantenöffnungen T_{SK,A} an der Außenseite benachbart zu den zweiten Strömungsöffnungen As und eine ringförmige Anordnung von vierten Steuerkantenöffnungen T_{SK,B}, welche an der entgegengesetzten Außenseite benachbart zu den dritten Strömungsöffnungen Bs gelegen sind. Die dritten und vierten Steuerkantenöffnungen T_{SK,A}, T_{SK,B} sind vorzugsweise zur Verbindung mit einem Rücklauf bzw. Tank vorgesehen. Die zu den ersten Strömungsöffnungen As benachbarten dritten Steuerkantenöffnungen T_{SK,A} können über die Strömungsaussparung 8 in Verbindung mit den Strömungsöffnungen As gebracht werden. Hierzu muss wie in Figur 1c gezeigt der Ventilkolben 4 nach links verlagert werden. Wenn der Ventilkolben 4 in entgegengesetzter Richtung nach rechts verlagert wird, wie in Figur 1b gezeigt, werden die dritten Strömungsöffnungen Bs mit den vierten Steuerkantenöffnungen T_{SK,B} über die Strömungsaussparung 12 in Verbindung gebracht.

Die Steuerkantenöffnungen T_{SK,A}, T_{SK,B}, A_{SK} und B_{SK} definieren an der Innenseite der Ventilhülse 2 Steuerkanten 14, welche mit entsprechenden Steuerkanten 16 an den Längskanten der Strömungsaussparungen 8, 10, 12 zusammenwirken. Die Steuerkanten 14 und 16 begrenzen die offenen Querschnitte der Steuerkantenöffnungen T_{SK,A}, T_{SK,B}, A_{SK} und B_{SK} abhängig von der linearen Funktionsstellung des Ventilkolbens 4. Im geschlossenen Zustand überlappen die Steuerkanten 14 mit den Steuerkanten 16 am Ventilkolben 4. Figur 1a zeigt eine Ruhestellung, in der alle Steuerkantenöffnungen T_{SK,A}, T_{SK,B}, A_{SK} und B_{SK} geschlossen sind. Wird der Ventilkolben 4 wie in Figur 1c gezeigt nach links verlagert, werden die Steuerkanten 14 und 16 in den dritten Steuerkantenöffnungen T_{SK,A} und den zweiten Steuerkantenöffnungen B_{SK} Beabstandet, sodass diese freigegeben werden. Die vierten Steuerkantenöffnungen T_{SK,B} sowie die erste Steuerkantenöffnungen A_{SK} bleiben dabei geschlossen. In diesem Stellbereich kann beispielsweise ein Strömungsfluss von einer Hydraulikquelle P₁ zu einem ersten Steueranschluss B und durch den zweiten Steueranschluss zurück in die Strömungsöffnung As und von dort über die dritte Steuerkantenöffnungen T_{SK,A} zurück in einen Tank oder Rücklauf erfolgen. Wenn der Ventilkolben 4 aus der in Figur 1a gezeigten Ruhestellung nach rechts in die in Figur 1b gezeigte Funktionsstellung verlagert wird, erfolgt eine Strömungsumkehr, bei welcher das Fluid von einer Hydraulikquelle P₁ durch die ersten Strömungsöffnungen P₁ zu den ersten Steuerkantenöffnungen A_{SK} und von dort zu einem ersten Steueranschluss A strömt. Von einem zweiten Steueranschluss B erfolgt die Strömung zurück in die dritten Strömungsöffnungen Bs und von dort über die Strömungsaussparungen 12 zu den vierten Steuerkantenöffnungen T_{SK,B} und von dort zurück in einen Tank oder Rücklauf.

Es ist zu erkennen, dass in allen diesen beschriebenen Funktionsstellungen die Steuerkantenöffnungen T_{SK,A}, T_{SK,B}, A_{SK} und B_{SK} stets von innen nach außen durchströmt werden, d.h. ausgehend von der angrenzenden Strömungsaussparung, 8, 10, 12 durch die Ventilhülse 2 nach außen. D.h. alle Steuerkanten 14 werden in derselben Richtung angeströmt, sodass bekannte Strömungskraft-Kompensationsmaßnahmen exakt für diese ausschließlich gegebene Strömungsrichtung optimiert werden können. Sich abhängig von der Funktionsstellung ändernde Strömungsrichtungen würden Kompromisse erfordern, welche hier vermieden werden. Es ist zu verstehen, dass das beschriebene Ventil entsprechend für pneumatische Anwendungen zum Einsatz kommen könnte. Ferner erfolgt in den Strömungsaussparungen 8, 10 und 12 eine Strömungsumlenkung, durch welche eine zusätzliche Linearkraft in Richtung der Längsachse x auf den Ventilkolben 4 ausgeübt wird. Durch die schräg verlaufenden Einströmrichtungen durch die Strömungsöffnungen As und Bs wird eine stärkere Strömungsumlenkung jeweils zu den Steuerkantenöffnung T_{SK,A} und T_{SK, B} erreicht, sodass an diesen Längsenden bzw. Austrittsenden der Strömungsaussparungen 8 und 12 zusätzliche Kräfte wirken können, die der in Schließrichtung des Ventils wirkenden Strömungskraft entgegen wirken.

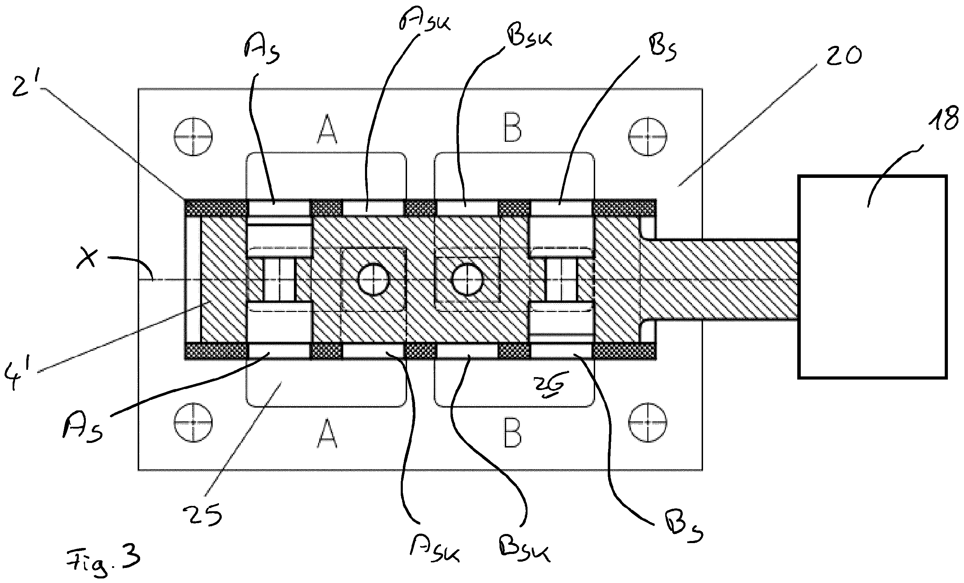

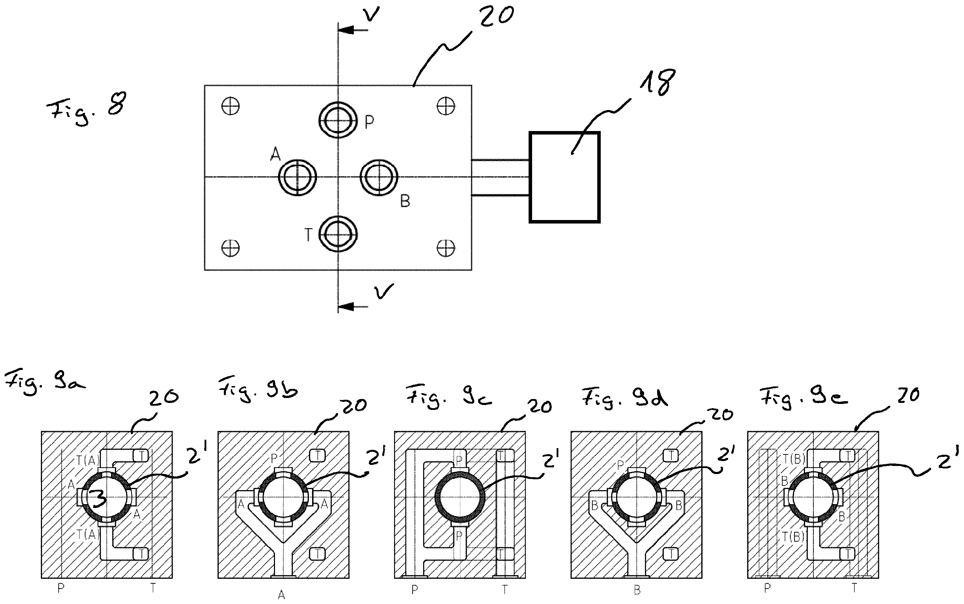

In Figuren 2 bis 9 ist ein zweites Ausführungsbeispiel gezeigt, bei welchem ein Ventilkolben 4' drehbeweglich in einer Ventilhülse 2' gelagert ist. Zur Drehung ist der Ventilkolben 4' mit einem Drehantrieb 18 verbunden. Die Figuren 2, 3, 8 und 9a bis 9e zeigen zusätzlich zu der Ventilhülse 2' ein umgebendes Ventilgehäuse 20, welches die Anschlusskanäle A, B, T(A) und T(B) und Anschlussräume zu den Strömungsöffnungen und Steuerkantenöffnungen in der Ventilhülse 4 definiert. In dem hier gezeigten Beispiel sind vier verschiedene Anschlüsse vorgesehen, ein Einlassanschluss P, ein Auslassanschluss T, ein erster Steueranschluss A und ein zweiter Steueranschluss B. Die Anschlüsse münden alle an der Seite des Ventilgehäuses 20, welche in Figur 2 die Unterseite ist und in Figur 8 in Draufsicht gezeigt ist. In dem Ventilgehäuse 20 sind mit den genannten Anschlüssen verbundene Strömungsräume ausgebildet, welche die Verbindungen zu den Strömungsöffnungen und Steuerkantenöffnungen in der Ventilhülse 2' herstellen. Der Strömungsraum 22, welcher in Figur 2 gezeigt ist, ist mit dem Einlassanschluss P des Ventilgehäuses 20 verbunden und die benachbarten Strömungsräume 23 und 24 sind mit dem Auslassanschluss T des Ventilgehäuses 20 verbunden. Um 90° versetzt sind am Außenumfang der Ventilhülse 2' in dem Ventilgehäuse 20 die Strömungsräume 25 und 26 ausgebildet (siehe Figur 3), welche mit den Steueranschlüssen A und B in Verbindung stehen. Die Figuren 9a bis 9e zeigen in fünf Schnittansichten den Verlauf der Anschlusskanäle zu dem Einlass P, dem Auslass T sowie den Steueranschlüssen A und B. Durch die um 90° versetzte Anordnung am Außenumfang der Ventilhülse 2' können in den verschiedenen Ebenen kreuzweise Anordnungen von Anschlüssen realisiert werden. Dies ermöglicht eine relativ einfache Ausgestaltung des Ventilgehäuses 20 mit den darin ausgebildeten Strömungskanälen von den Anschlüssen A, B, P, T zu der Ventilhülse 2'.

Der Strömungsraum 22, welcher mit dem Einlass P in Verbindung steht, überdeckt am Außenumfang der Ventilhülse 2' die ersten Strömungsöffnungen P₁. Die Strömungsräume 23 überdecken am Außenumfang der Ventilhülse 2' die dritten Steuerkantenöffnungen T_{SK,A}. Die Strömungsräume 24 überdecken an der Außenseite der Ventilhülse 2' die vierten Steuerkantenöffnungen T_{SK,B} gemäß der zweiten Variante. Die dritten Steuerkantenöffnungen T_{SK, A} sind über die Strömungskanäle T(A) mit dem Auslass T verbunden, während die vierte Steuerkantenöffnungen T_{SK, B} über die Strömungskanäle T(B) mit dem Auslass T verbunden sind, wie in Figur 9a und Figur 9e zu erkennen ist. Wie in Figur 3 zu erkennen ist, überdecken die Strömungsräume 25 am Außenumfang der Ventilhülse 2' die zweiten Strömungsöffnungen As sowie die ersten Steuerkantenöffnungen A_{SK}. Die Strömungsräume 26 überdecken am Außenumfang der Ventilhülse 2' die dritten Strömungsöffnungen Bs und die zweiten Steuerkantenöffnungen B_{SK}.

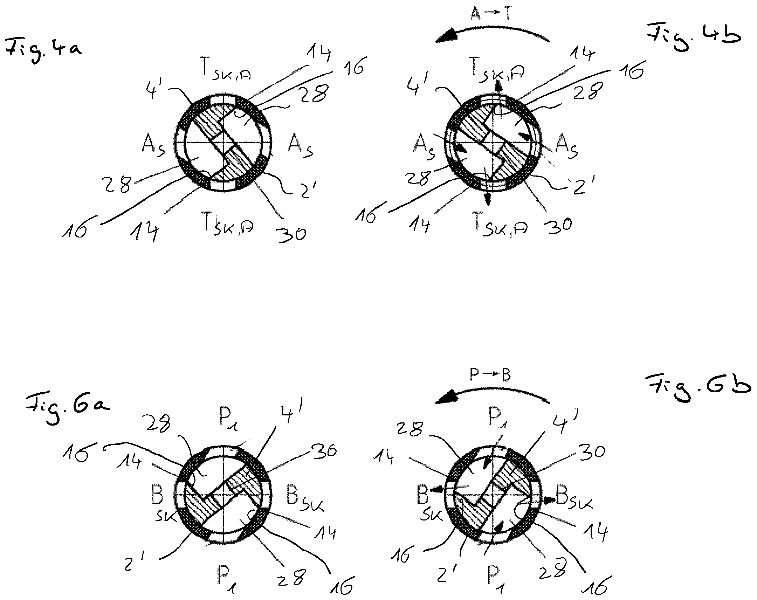

Durch die beschriebene Anordnung von Strömungsöffnungen, Steuerkantenöffnungen sowie Strömungsräumen 22, 23, 24, 25 und 26 werden entlang der Längs- bzw. Drehachse X versetzt vier Funktionsebenen gebildet, welche durch die Querschnitte I, II, III und IV definiert sind und anhand der Querschnittansichten gemäß Figuren 4 bis 7 näher beschrieben werden. In der ersten Funktionsebene I, die in Querschnitt in Figuren 4a und 4b gezeigt ist, sind die zweiten Strömungsöffnungen As und die dritten Steuerkantenöffnungen T_{SK,A} gelegen. Dabei sind zwei zweite Strömungen As an diametral entgegengesetzten Seiten angeordnet und die zwei Steuerkantenöffnungen T_{SK,A} sind ebenfalls an diametral entgegengesetzten Seiten um 90° versetzt zu den Strömungsöffnungen As angeordnet. Der Ventilkolben 4' ist in der Querschnittsebene I punksymmetrisch ausgebildet und weist zwei Strömungsaussparungen 28 auf, welche über einen Verbindungskanal 30 zum Druckausgleich miteinander verbunden sind. Die beiden Strömungsaussparungen 28 sind über einen Bogen größer als 90° zum Außenumfang des Ventilkolbens 4' hin geöffnet. In diesem Bereich sind sie den zweiten Strömungsöffnungen As zugewandt, sodass eine Strömungsverbindung von den zweiten Strömungsöffnungen As in die Strömungsaussparungen 28 hinein besteht. In der in Figur 4a gezeigten Ruhelage sind die dritten Steuerkantenöffnungen T_{SK,A} durch den Ventilkolben 4' überdeckt und verschlossen. Wenn der Ventilkolben 4'in Richtung des Pfeils in die in Figur 4b gezeigte Funktionsstellung nach links verdreht wird, entfernen sich die Steuerkanten 16, welche die Strömungsaussparungen 28 begrenzen von den Steuerkanten 14 in den Steuerkantenöffnungen T_{SK,A}, sodass die Steuerkantenöffnungen T_{SK,A} abhängig von der Winkelposition des Ventilkolbens 4' geöffnet werden und die Strömung aus den Strömungsaussparungen 28 durch die Steuerkantenöffnungen T_{SK,A} über den Strömungsraum 23 und die Auslasskanäle T(A) zu dem Auslassanschluss T erfolgen kann.

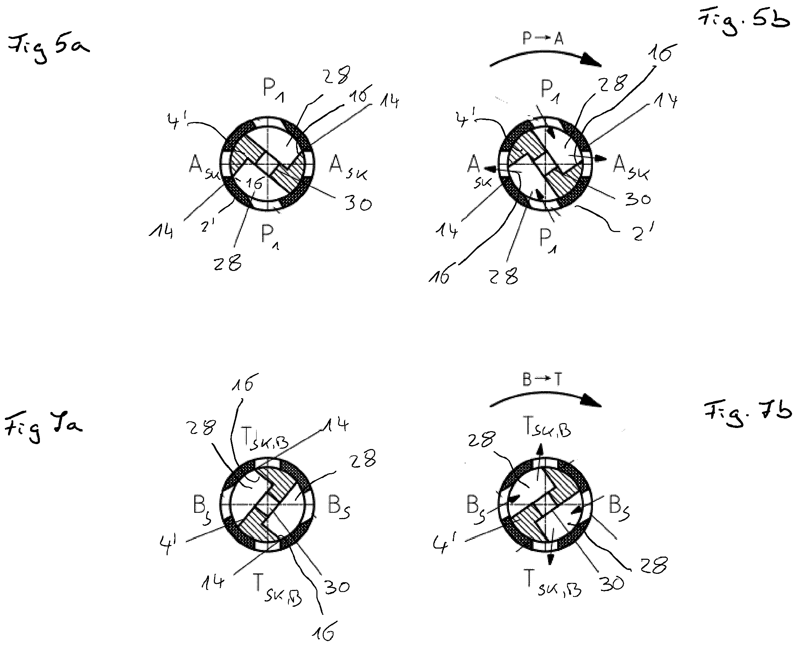

Figur 5a zeigt in derselben Winkelposition des Ventilkolbens 4', wie sie in Figur 4a gezeigt ist, den Querschnitt entlang der Linie II, d.h. in einer zweiten Funktionsebene. In dieser sind erste Strömungsöffnungen P₁ sowie die ersten Steuerkantenöffnungen A_{SK} gelegen. Der Ventilkolben 4' weist auch in der Querschnittsebene II eine punktsymmetrische Gestalt auf, ähnlich der Gestaltung in der Querschnittsebene I, allerdings gespiegelt und um 90° gedreht. So sind in der in Figur 5a gezeigten Ruhestellung des Ventilkolbens 4' die ersten Strömungsöffnungen P₁ zu den Strömungsaussparungen 28 hin geöffnet, während die ersten Steuerkantenöffnungen A_{SK} geschlossen sind. Wird aus dieser Winkellage der Ventilkolben 4' nach rechts in die in Figur 5b gezeigte Funktionsstellung verdreht, entfernen sich die Steuerkanten 16 an den Strömungsaussparungen 18 von den Steuerkanten 14 in den ersten Steuerkantenöffnungen A_{SK} und die zweiten Steuerkantenöffnungen A_{SK} werden abhängig von der Winkelposition des Ventilkolbens 4' geöffnet. So wird eine Strömungsverbindung von dem Einlassanschluss P über den Strömungsraum 22 in die ersten Strömungsöffnungen P₁ und von diesen über die Strömungsaussparungen 28 zu den ersten Steuerkantenöffnungen A_{SK} hin geschaffen. Von dort verläuft die Strömung über die Strömungsräume 25 zu dem Steueranschluss A. Wird hingegen der Ventilkolben 4' aus der Ruhestellung gemäß Figur 5a nach links verdreht, in die die Winkelstellung gemäß Figur 4b, bleiben die ersten Steuerkantenöffnungen A_{SK} verschlossen.

Figur 6a zeigt den Querschnitt entlang der Querschnittsebene III, welche eine dritte Funktionsebene definiert. In dieser Funktionsebene sind erste Strömungsöffnungen P₁ sowie die zweiten Steuerkantenöffnungen B_{SK} gelegen. Es sind jeweils zwei Strömungsöffnungen P₁ an diametral entgegengesetzten Seiten der Ventilhülse 2' angeordnet. Um 90° versetzt dazu sind an zwei diametral entgegengesetzten Seiten die zweiten Steuerkantenöffnungen B_{SK} in der Ventilhülse 2' ausgebildet. Der Ventilkolben 4' weist in dieser Querschnittsebene III ebenfalls eine punktsymmetrische Gestalt entsprechend der Gestalt in Figuren 4a und 4b auf. Diese ist in derselben Funktionsstellung lediglich um 90° gedreht ausgebildet. So sind zwei Strömungsaussparungen 28 vorhanden, welche den ersten Strömungsöffnungen P₁ zugewandt sind. In der in Figur 6a gezeigten Ruhestellung sind die zweiten Steuerkantenöffnungen B_{SK} durch den Ventilkolben 4' verschlossen. Wenn der Ventilkolben 4 in Richtung des Pfeils nach links i die in Figur 6b gezeigte Funktionsstellung gedreht wird, entfernen sich die Steuerkanten 16 an den Strömungsaussparungen 28 von den Steuerkanten 14 in den zweiten Steuerkantenöffnungen B_{SK}, sodass diese in Abhängigkeit der Winkelposition des Ventilkolbens 14 freigegeben werden. So wird dann eine Strömungsverbindung von dem Einlassanschluss P über den Strömungsraum 22 und die ersten Strömungsöffnungen P₁ zu der Strömungsaussparung 28 geschaffen. Von der Strömungsaussparung 28 verläuft die Strömung durch die zweiten Steuerkantenöffnungen B_{SK} in den Strömungsraum 26 und von dort zu dem Steueranschluss B. Dies erfolgt in demselben Stellbereich wie das Öffnen der dritten Steuerkantenöffnungen T_{SK,A} in der in Figuren 4a und 4b gezeigten Funktionsebene. Bei dieser Drehung des Ventilkolbens 4' bleiben die vierten Steuerkantenöffnungen T_{SK,B}, welche in Figur 7a in der vierten Funktionsebene IV gezeigt sind, sowie die ersten Steuerkantenöffnungen A_{SK} verschlossen.

Figuren 7a und 7b zeigen den Querschnitt entlang der vierten Funktionsebene IV in Figur 2. In dieser Funktionsebene IV sind zwei dritte Strömungsöffnungen Bs an diametral entgegengesetzten Seiten der Ventilhülse 2' gelegen. Um 90° versetzt an zwei diametral entgegengesetzten Seiten sind zwei vierte Steuerkantenöffnungen T_{SK,B} angeordnet. Der Ventilkolben 4' weist im Querschnitt dieselbe Form wie der Querschnitt des Ventilkolbens 4' in der zweiten Funktionsebene II auf, nur dass die Gestaltung um 90° gedreht ist. Auch hier sind punktsymmetrisch zwei Strömungsaussparungen 28 ausgebildet, welche zu den dritten Strömungsöffnungen Bs hin geöffnet sind. Durch Drehung des Ventilkolbens 4' nach rechts in die in Figur 7b gezeigte Funktionsstellung, d.h. in einen zweite Stellbereich, werden die vierten Steuerkantenöffnungen T_{SK,B} geöffnet, indem die Steuerkanten 16 an dem Ventilkolben 4' von den Steuerkanten 14 in den Steuerkantenöffnungen T_{SK,B} entfernt werden. So wird ein Strömungsweg von den dritten Strömungsöffnungen Bs zu den vierten Steuerkantenöffnungen T_{SK,B} hin geöffnet. Die vierten Steuerkantenöffnungen T_{SK,B} sind über die Strömungsräume 24 und die Strömungskanäle T(B) mit dem Auslassanschluss T verbunden. Die dritten Strömungsöffnungen Bs sind über die Strömungsräume 26 mit dem Steueranschluss B verbunden.

Mit dem Ventil gemäß dieser zweiten Ausführungsform kann somit durch Drehung des Ventilkolbens 4' aus der in den Figuren 4a, 5a, 6a und 7a gezeigten Ausgangslage in einer ersten Richtung (in Figuren 4 und 6 nach links) ein erster Stellbereich realisiert werden, in welchen der Steueranschluss B mit dem Einlassanschluss P und der Steueranschluss A mit dem Auslassanschluss T verbunden werden. Durch Drehung in entgegengesetzter Richtung (in Figuren 5 und 7 nach rechts) wird in einem zweiten Stellbereich der Einlassanschluss P mit dem Steueranschluss A verbunden und gleichzeitig der Steueranschluss B mit dem Auslassanschluss T. Durch Variation der Winkellage bzw. Funktionsstellung des Ventilkolbens 4' in dem jeweiligen Stellbereich kann der Strömungsquerschnitt der Strömungswege variiert werden.

Es ist zu erkennen, dass auch bei der zweiten Ausführungsform die Steuerkantenöffnungen T_{SK,A}, T_{SK,B}, A_{SK} und B_{SK} stets in derselben Richtung, d.h. hier von innen nach außen durchströmt werden. Dadurch wird eine gleichförmige Strömungskraft an allen Steuerkantenöffnungen erreicht. Ferner ist zu erkennen, dass die Strömungsaussparungen 28 eine Umlenkung der Strömung, hier im Wesentlichen um 90° bewirken, wodurch eine Kraft bzw. ein Drehmoment auf den Ventilkolben 4' bewirkt wird, welches den an den Steuerkanten 14 auftretenden Strömungskräften entgegengesetzt gerichtet ist. So können die Stellkräfte, welche über den Drehantrieb 18 aufgebracht werden müssen, verringert werden. Auch in der zweiten Ausführungsform sind die Strömungsöffnungen P₁, As und Bs so gestaltet, dass beim Einströmen in die Strömungsaussparungen 28 im Wesentlichen keine Strömungsumlenkung auftritt, sodass im Wesentlichen nur einmal eine Strömungsumlenkung um 90° bewirkt wird, wodurch gezielt ein Drehmoment lediglich in einer Drehrichtung in der jeweiligen Funktionsstellung realisiert wird.

### Bezugszeichenliste

- 2, 2`: Ventilhülse
- 4, 4`: Ventilkolben
- 6: Linearantrieb
- 8, 10, 12: Strömungsaussparungen
- 14: Steuerkanten an den Steuerkantenöffnungen
- 16: Steuerkanten am Ventilkolben
- 18: Drehantrieb
- 20: Ventilgehäuse
- 22, 23, 24, 25, 26: Strömungsräume
- 28: Strömungsaussparung
- 30: Verbindungskanal
- P₁: erste Strömungsöffnungen
- As: zweite Strömungsöffnungen
- Bs: dritte Strömungsöffnungen
- A_{SK}: erste Steuerkantenöffnungen
- B_{SK}: zweite Steuerkantenöffnungen
- T_{SK,A}: dritte Steuerkantenöffnungen
- T_{SK,B}: vierte Steuerkantenöffnungen

- x: Längsachse
- P: Einlassanschluss, Einlasskanäle
- T: Auslassanschluss
- T(A), T(B): Auslasskanäle
- A, B: Steueranschlüsse, Anschlusskanäle

## Patentansprüche

1. Hydraulik- oder Pneumatik-Ventil, welches als 4/3-Wege-Stetigventil ausgebildet ist und eine Ventilhülse sowie einen im Inneren der Ventilhülse (2; 2') angeordneten beweglichen Ventilkolben (4; 4') aufweist, wobei die Ventilhülse zumindest eine erste (P₁) und zumindest eine zweite Strömungsöffnung (As), welche jeweils zu einer Strömungsaussparung (8, 10; 28) in dem Ventilkolben (4) hin geöffnet sind, und zumindest eine erste Steuerkantenöffnung (A_{SK}) sowie zumindest eine zweite Steuerkantenöffnung (B_{SK}) aufweist, welche jeweils zum Zusammenwirken mit einer an eine der Strömungsaussparungen (8, 10; 28) angrenzende Steuerkante (16) des Ventilkolbens (4; 4')ausgebildet sind,
**dadurch gekennzeichnet, dass**
die Ventilhülse (2; 2') mit den Strömungsöffnungen (P₁, As) und den Steuerkantenöffnungen (A_{SK}, B_{SK}) sowie der Ventilkolben (4; 4') mit den Strömungsaussparungen (8, 10; 28) derart ausgestaltet sind, dass alle Steuerkantenöffnungen (A_{SK}, B_{SK}) dieselbe Strömungsrichtung definieren.

2. Hydraulik- oder Pneumatik-Ventil nach einem der vorangehenden Ansprüche, **dadurch gekennzeichnet, dass** das Ventil einen Einlassanschluss (P), einen Auslassanschluss (T) sowie einen ersten Steueranschluss (A) und einen zweiten Steueranschluss (B) aufweist und dass der Einlassanschluss (P) mit der zumindest einen ersten Strömungsöffnung (P₁) verbunden ist und/oder dass der Auslassanschluss (T) mit zumindest einer, vorzugsweise zwei der Steuerkantenöffnungen verbunden ist.

3. Hydraulik- oder Pneumatik-Ventil nach Anspruch 1 oder 2, **dadurch gekennzeichnet, dass** die Ventilhülse (2; 2') zumindest eine dritte Strömungsöffnung (Bs) aufweist, welche zu einer Strömungsaussparung (12; 28) in dem Ventilkolben (4; 4') hin geöffnet ist, und dass ein erster Steueranschluss (A) des Ventils mit der zumindest einen zweiten Strömungsöffnung (As) sowie der zumindest einen ersten Steuerkantenöffnung (A_{SK}) verbunden ist und/oder dass ein zweiter Steueranschluss (B) des Ventils mit der zumindest einen dritten Strömungsöffnung (Bs) sowie der zumindest einen zweiten Steuerkantenöffnung (B_{SK}) verbunden ist.

4. Hydraulik- oder Pneumatik-Ventil nach einem der vorangehenden Ansprüche, **dadurch gekennzeichnet, dass** der Ventilkolben (4; 4') zumindest eine Strömungsaussparung aufweist, welche in einer ersten Funktionsstellung des Ventilkolbens (4; 4') die erste Strömungsöffnung (P₁) mit der ersten Steuerkantenöffnung (A_{SK}) verbindet und in einer zweiten Funktionsstellung des Ventilkolbens (4; 4') die erste Strömungsöffnung (P₁) mit der zweiten Steuerkantenöffnung (B_{SK}) verbindet, wobei vorzugsweise zumindest eine Strömungsaussparung (10; 28) in einer ersten Funktionsstellung die erste Strömungsöffnung (P₁) mit der ersten Steuerkantenöffnung (A_{SK}) verbindet und zumindest eine Strömungsaussparung (10; 28) in einer zweiten Funktionsstellung die erste Strömungsöffnung (P₁) mit der zweiten Steuerkantenöffnung (B_{SK}) verbindet.

5. Hydraulik- oder Pneumatik-Ventil nach einem der vorangehenden Ansprüche, **dadurch gekennzeichnet, dass** die Ventilhülse (2; 2') zumindest eine dritte Steuerkantenöffnung (T_{SK,A}) aufweist, welche zum Zusammenwirken mit einer an eine der Strömungsaussparungen (8; 28) angrenzenden Steuerkante (16) des Ventilkolbens (4; 4') ausgebildet ist und dieselbe Strömungsrichtung wie die zumindest eine erste (A_{SK}) und die zumindest eine zweite(B_{SK}) Steuerkantenöffnung definiert, und in dem Ventilkolben (4; 4') zumindest eine Strömungsaussparung (8; 28) ausgebildet ist, welche in einer möglichen Funktionsstellung eine zweite Strömungsöffnung (As) mit der zumindest einen dritten Steuerkantenöffnung (T_{SK,A}) verbindet, und
dass die Ventilhülse (2; 2') vorzugsweise eine vierte Steuerkantenöffnung (T_{SK,B}) aufweist, welche zum Zusammenwirken mit einer an eine der Strömungsaussparungen (12; 28) angrenzenden Steuerkante (16) des Ventilkolbens (4; 4') ausgebildet ist und dieselbe Strömungsrichtung wie die zumindest eine erste (A_{SK}) und die zumindest eine zweite Steuerkantenöffnung (B_{SK}) definiert, und vorzugsweise in dem Ventilkolben (4; 4') zumindest eine Strömungsaussparung (12; 28) ausgebildet ist, welche in einer möglichen Funktionsstellung eine dritte Strömungsöffnung (Bs) mit der zumindest einen vierten Steuerkantenöffnung (T_{SK,B}) verbindet.

6. Hydraulik- oder Pneumatik-Ventil nach einem der vorangehenden Ansprüche, **dadurch gekennzeichnet, dass** alle Steuerkantenöffnungen (T_{SK,A}, T_{SK,B}, A_{SK}, B_{SK}) eine Strömungsrichtung von dem Ventilkolben (4; 4') zu der Ventilhülse (2; 2') definieren oder alle Steuerkantenöffnungen (T_{SK,A}, T_{SK,B}, A_{SK}, B_{SK}) eine Strömungsrichtung von der Ventilhülse (2; 2') zu dem Ventilkolben (4; 4') definieren.

7. Hydraulik- oder Pneumatik-Ventil nach einem der vorangehenden Ansprüche, **dadurch gekennzeichnet, dass** der Ventilkolben (4) in der Ventilhülse (2) linear beweglich angeordnet ist und mit einem Linearantrieb (6) zur Bewegung des Ventilkolbens (4) verbunden ist oder dass der Ventilkolben (4') in der Ventilhülse (2') drehbeweglich angeordnet ist und mit einem Schwenkantrieb (18) zur Bewegung des Ventilkolbens (4') verbunden ist.

8. Hydraulik- oder Pneumatik-Ventil nach einem der vorangehenden Ansprüche, **dadurch gekennzeichnet, dass** die Ventilhülse (2; 2') sowie der Ventilkolben (4; 4') mit den Strömungsaussparungen (8, 10, 12; 28) derart ausgebildet sind, dass in einem ersten Stellbereich des Ventilkolbens (4; 4') die zumindest eine erste Strömungsöffnung (P₁) mit der zumindest einen ersten Steuerkantenöffnung (A_{SK}) und die zumindest eine dritte Strömungsöffnung (Bs) mit der zumindest einen vierten Steuerkantenöffnung (T_{SK,B}) verbunden sind und/oder dass in einem zweiten Stellbereich des Ventilkolbens (4; 4') die zumindest eine erste Strömungsöffnung (P₁) mit der zumindest einen dritten Steuerkantenöffnung (B_{SK}) und die zumindest eine zweite Strömungsöffnung (As) mit der zumindest einen dritten Steuerkantenöffnung (T_{SK,A}) verbunden sind.

9. Hydraulik- oder Pneumatik-Ventil nach einem der vorangehenden Ansprüche, **dadurch gekennzeichnet, dass** der Ventilkolben (4') in der Ventilhülse (2') drehbeweglich angeordnet ist und dass die Ventilhülse (2') und der Ventilkolben (4') mehrere in Richtung der Drehachse des Ventilkolbens versetzte Funktionsebenen (I, II, III, IV) definieren, wobei in jeder Funktionsebene (I, II, III, IV) zumindest eine Strömungsöffnung sowie zumindest eine Steuerkantenöffnung (T_{SK,A}, T_{SK,B}, A_{SK}, B_{SK}) gelegen sind und der Ventilkolben (4') zumindest eine Strömungsaussparung (28) aufweist, über welche eine in Abhängigkeit der Position des Ventilkolbens (4') veränderliche Verbindung zwischen dieser zumindest einen Strömungsöffnung (P₁, As, Bs) sowie dieser zumindest einen Steuerkantenöffnung (T_{SK,A}, T_{SK,B}, A_{SK}, B_{SK}) herstellbar ist.

10. Hydraulik- oder Pneumatik-Ventil nach Anspruch 9, **dadurch gekennzeichnet, dass** die Ventilhülse (2') und der Ventilkolben (4') vier Funktionsebenen (I, II, III, IV) definieren, von denen in einer ersten Funktionsebene (I) zumindest eine dritte Steuerkantenöffnung (T_{SK,A}) und zumindest eine zweite Strömungsöffnung (As) angeordnet sind, in einer zweiten Funktionsebene (II) zumindest eine erste Strömungsöffnung (P₁) und zumindest eine erste Steuerkantenöffnung (A_{SK}) angeordnet sind, in einer dritten Funktionsebene (III) zumindest eine erste Strömungsöffnung (P₁) und zumindest eine zweite Steuerkantenöffnung (B_{SK}) angeordnet sind, und in einer vierten Funktionsebene (IV) zumindest eine vierte Steuerkantenöffnung (T_{SK,B}) sowie eine dritte Strömungsöffnung (Bs) angeordnet sind.

11. Hydraulik- oder Pneumatik-Ventil nach Anspruch 9 oder 10, **dadurch gekennzeichnet, dass** in zumindest zwei Funktionsebenen (I, II, III, IV) die Steuerkanten (16) an dem Ventilkolben (4') in Umfangsrichtung versetzt zueinander angeordnet sind, vorzugsweise in einem Winkel von 90° zueinander versetzt angeordnet sind, wobei bevorzugt in den zumindest zwei Funktionsebenen (I, II, III, IV) die zumindest eine dritte und die zumindest eine vierte Steuerkantenöffnungen (T_{SK,A}, T_{SK,B}) an derselben Winkelposition wie die zumindest eine erste Strömungsöffnung (P₁) und die zumindest eine erste und die zumindest eine zweite Steuerkantenöffnungen (A_{SK}, B_{SK}) an derselben Winkelposition wie die zumindest eine zweite und die zumindest eine dritte Strömungsöffnungen (As, Bs) angeordnet sind.

12. Hydraulik- oder Pneumatik-Ventil nach einem der Ansprüche 9 bis 11, **dadurch gekennzeichnet, dass** die Ventilhülse (2') derart ausgestaltet ist, dass in den Funktionsebenen (I, II, III, IV) die zumindest eine erste Steuerkantenöffnung (A_{SK}), die zumindest eine zweite Steuerkantenöffnung (B_{SK}), die zumindest eine zweite Strömungsöffnung (As) und die zumindest eine dritte Strömungsöffnung (Bs) an derselben ersten Umfangsposition angeordnet sind und die zumindest eine erste Strömungsöffnung (P₁) und die zumindest eine dritte Steuerkantenöffnung (T_{SK,A}) sowie die zumindest eine vierte Steuerkantenöffnung (T_{SK,B}) an der derselben zweiten Umfangsposition angeordnet sind, wobei die erste und die zweite Umfangsposition in Umfangsrichtung beabstandet, vorzugsweise um 90° beabstandet sind.

13. Hydraulik- oder Pneumatik-Ventil nach einem der vorangehenden Ansprüche, **dadurch gekennzeichnet, dass** der der Ventilkolben (4') in der Ventilhülse (2') drehbeweglich angeordnet ist und die Ventilhülse (2') und der Ventilkolben (4') zumindest eine Funktionsebene (I, II, III, IV) definieren, in welcher diametral entgegengesetzt zwei gleichartige Strömungsöffnungen und um 90° versetzt diametral gegenüberliegend zwei gleichartige Steuerkantenöffnungen angeordnet sind, wobei der Ventilkolben (4') in der Funktionsebene (I, II, III, IV) zwei im Querschnitt zueinander punktsymmetrisch ausgebildete Strömungsaussparungen (28) aufweist, welche vorzugsweise durch einen Verbindungskanal (30) miteinander verbunden sind.

14. Hydraulik- oder Pneumatik-Ventil nach einem der vorangehenden Ansprüche, **dadurch gekennzeichnet, dass** die Strömungsaussparungen (28) in dem Ventilkolben (4; 4') derart ausgebildet sind, dass in einem Strömungsweg von eine Strömungsöffnung (P₁, As, Bs) zu einer Steuerkantenöffnung (T_{SK,A}, T_{SK,B}, A_{SK}, B_{SK}) in der Strömungsaussparung (8, 10, 12; 28) eine Strahlumlenkung erfolgt, welche eine Kraft auf den Ventilkolben (4; 4') bewirkt.
